# FASCICULE DE BREVET EUROPEEN

(11) **EP 1 904 366 B1**
(45) Date de publication et mention de la délivrance du brevet: **23.12.2009**
(21) Numéro de dépôt: 06777729.2
(22) Date de dépôt: 12.07.2006
(51) Int. Cl.: B64C 1/12

(54) **PANNEAU AUTO-RAIDI MONOLITHIQUE**
MONOLITHISCHE SELBST-VERSTEIFENDE PLATTEN
MONOLITHIC SELF-STIFFENED PANELS

(30) Priorité: 20.07.2005 FR 0552255
(43) Date de publication de la demande: 02.04.2008
(73) Titulaire: AIRBUS France, 31060 Toulouse (FR)
(72) Inventeur: CACCIAGUERRA, Bruno, F-31810 Clermont le Fort (FR)
(74) Mandataire: Schmit, Christian Norbert Marie
(86) Numéro de dépôt international: PCT/EP2006/064154
(87) Numéro de publication internationale: WO 2007/009923

(56) Documents cités:
- DE-A1- 19 639 339
- US-A- 4 471 609
- US-A1- 2002 100 840

## Description

La présente invention concerne un panneau auto-raidi monolithique, notamment un panneau composite pour une trappe de train d'atterrissage d'aéronef.

Les panneaux de trappes d'atterrissage d'aéronefs sont des panneaux qui doivent être légers tout en supportant de nombreuses ouvertures et fermetures, générer peu de traînée et qui doivent être capables de résister à des contraintes thermiques, vibratoires et aérodynamiques importantes.

Les constructions traditionnelles de trappes de train d'atterrissage font appel à des panneaux métalliques sur lesquels sont directement fixées des ferrures. Des réalisations utilisant des panneaux composites cf. US 2002/0 100 840, US 4 471 609 et DE 196 39 339 existent mais la fixation des ferrures reste complexe.

Une difficulté pour remplacer les panneaux traditionnels métalliques par des panneaux sandwich en matériaux composites est que ces panneaux sont plus sensibles aux impacts et risquent de se remplir d'eau sans pouvoir être vidés. Il est nécessaire d'une part de renforcer les panneaux ce qui rend leur bilan de poids moins favorable et d'autre part de les rendre étanches ce qui est complexe.

Pour ce qui concerne la fixation des ferrures, le document WO99/26841 A1 au nom de la demanderesse concerne la réalisation d'un panneau comportant des raidisseurs rapportés et des ferrures fixées sur le panneau. Cette réalisation utilisant des matériaux composites à plis multiples particulièrement adaptée pour la réalisation de capot de soufflante d'un réacteur reste toutefois d'une masse relativement importante et une réalisation plus économique et légère est recherchée.

La présente invention vise à permettre la réalisation de panneaux de trappes composites offrant une bonne tenue dans le temps, une masse inférieure à une solution métallique traditionnelle en autorisant une fixation des ferrures directement sur le panneau sans nécessiter de raidisseurs intermédiaires, dont les matériaux ne risquent pas de se remplir d'eau, le panneau pouvant en outre être drainé aisément.

Pour ce faire, la présente invention concerne un panneau composite selon la revendication 1, comportant une première peau formant la paroi externe du panneau dite face inférieure, une seconde peau formant partie de la paroi interne du panneau, **caractérisé en ce que** la seconde peau est formée en creux pour constituer un cadre de renfort interne formant au moins un raidisseur à profil creux, pourvu de bords tombés de fixation à la première peau, d'une face dite face supérieure, de flancs de liaison entre lesdits bords et ladite face supérieure, le cadre réalisant avec la première peau un panneau auto-raidi monolithique.

Avantageusement, le cadre de renfort interne réalise une pluralité de raidisseurs à profil creux répartis sur le pourtour du panneau.

Plus particulièrement, le cadre comporte des découpes délimitées par des portions de poutres en caisson. Selon l'invention, le cadre est notamment réalisé par emboutissage de la seconde peau, les peaux pouvant elles mêmes être réalisées en matériaux composites à matrice thermoplastique.

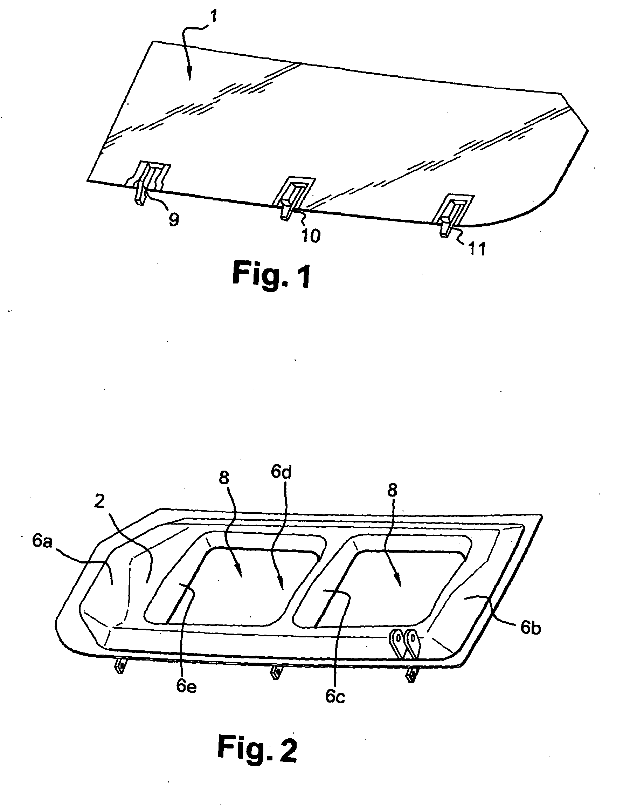

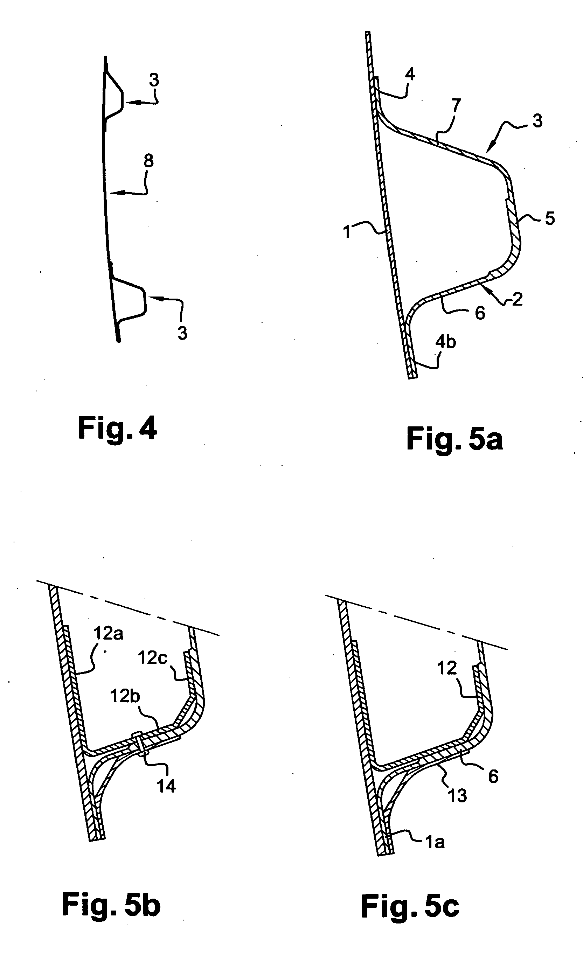

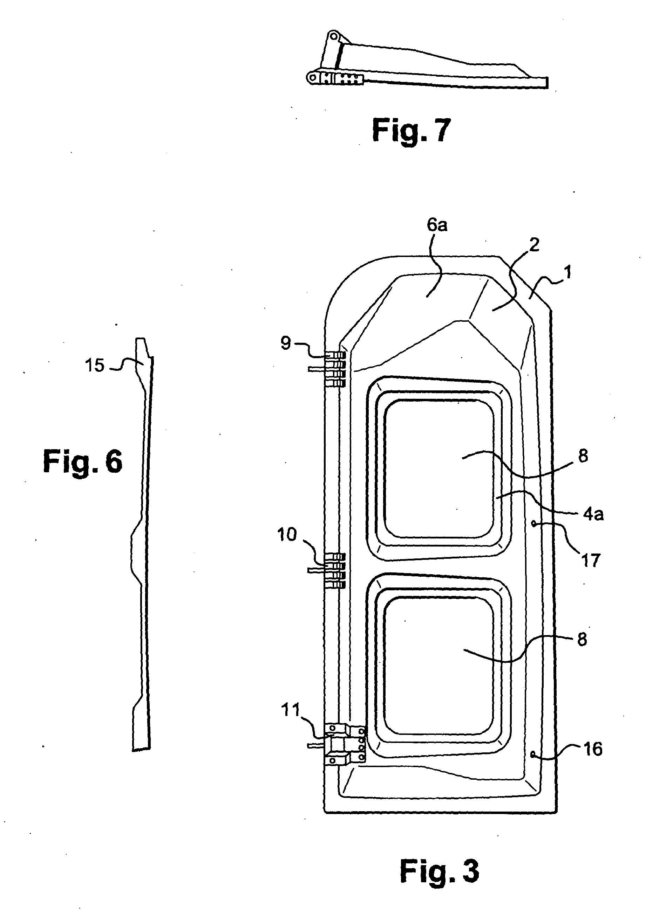

D'autres caractéristiques et avantages de l'invention seront mieux compris à la lecture de la description qui va suivre d'un exemple non limitatif de l'invention en référence aux figures qui représentent:
En figure 1: une vue de dessous en perspective d'un panneau selon l'invention;
en figure 2: une vue de dessus en perspective du panneau de la figure 1;
en figure 3: une vue de dessus du panneau de la figure 1;
en figure 4: une vue en coupe selon un axe JJ du panneau de la figure 3
en figures 5a, 5b, 5c: des vues de détails selon des coupes partielles du panneau de la figure 3;
en figure 6: une vue de côté d'une ferrure de renfort selon l'invention;
en figure 7 une vue de côté du panneau de la figure 3.

Le panneau composite représenté en figures 1 et 2 est un panneau de porte de train d'atterrissage d'un aéronef.

Selon l'invention, le panneau comporte une première peau formant la paroi externe du panneau, face inférieure 1 sur la figure 1, et une seconde peau formant partie de la paroi interne du panneau.

Pour obtenir du panneau une grande rigidité de sorte qu'aucun élément de raidissement structural supplémentaire rapporté ne soit nécessaire, la seconde peau est formée en creux pour constituer un cadre de renfort interne 2 en creux, à profil oméga ou autre réalisant avec la première peau un ensemble de poutres en caisson 3 implantées sur la partie interne du panneau et en particulier sur le pourtour du panneau.

Selon l'exemple représenté notamment en figure 2, le cadre 2 comporte des découpes 8 délimitées par les éléments de raidisseur constituant le cadre 2.

Les éléments de raidisseurs comportent des flancs latéraux et une face supérieure et sont pourvus d'un profil de section creuse, par exemple en forme de oméga, ou comportent par exemple des flancs latéraux en pente douce 6a, 6b, 6c, 6e du côté des découpes pour réduire la traînée aérodynamique du panneau.

Le cadre de renfort interne 2 réalise ainsi une pluralité de raidisseurs à profil creux répartis sur le pourtour du panneau et comporte des découpes 8 délimitées par des portions de poutres en caisson.

La vue de la figure 4, vue en coupe du panneau de la figure 3 selon un axe passant approximativement au centre d'une des découpes de la seconde peau représente deux sections des portions de raidisseurs conformés en poutres creuses encadrant la découpe de la seconde peau, la seconde peau étant solidarisée à la première peau.

Le cadre 2 forme ainsi un raidisseur du panneau allégé et est dessiné pour transmettre et répartir les efforts du panneau sur les ferrures 9, 10, 11 constituant des éléments de liaison au fuselage représentés notamment en figure 3 et en figure 7 vue du côté du panneau, assurant l'accrochage du panneau au fuselage et permettant la rotation du panneau pour permettre l'ouverture et la fermeture de la trappe de train constituée par au moins deux panneaux identiques selon l'invention.

Les peaux constituant le panneau sont par exemple réalisées en matériaux composites à matrice thermoplastique et le cadre 2 est réalisé par emboutissage de la seconde peau pour lui donner son profil réalisant des raidisseurs en poutres de section creuse entourant les deux découpes 8.

Pour réaliser le panneau, la deuxième peau est collée sur la première peau et est, pour ce faire, pourvue d'un rebord de fixation, constitué par des bords tombés 4a, 4b représentés notamment sur le détail figure 5a vue en coupe d'une section du panneau représenté en figure 3 vu de dessus.

Les bords tombés 4a, 4b permettent de coller la seconde peau à la première peau. Ils s'étendent le long des sections ajourées 8 et le long du profil extérieur de la paroi interne du panneau constituée avec la deuxième peau.

La paroi interne comporte en outre une face supérieure 5, des flancs de liaison 6, 6a, 6b, 6c, 6d, 6e, 7 entre les rebords 4a, 4b et ladite face supérieure 5 éventuellement ajourée.

Une section du panneau selon l'exemple est représentée plus particulièrement selon le détail K de la figure 5a. Sur ce détail une réalisation particulière pour laquelle la face supérieure 5 et une partie d'un flanc 6 comporte une zone épaissie renforçant le profil du raidisseur.

De par sa constitution en une première et une seconde peau avantageusement collées ensembles mais pouvant aussi être solidarisés par des moyens de fixation disposés sur les bords 4a, 4b, le panneau constitue un panneau auto-raidi monolithique qui peut comporter des moyens de drainage pour éviter la rétention d'eau.

Comme indiqué ci-dessus, le panneau comporte des éléments 9, 10, 11 de liaison au fuselage. Ces éléments de liaison comprennent des ferrures de liaison réalisées en une contre-ferrure interne 12 et une ferrure externe 13 pour leur liaison au panneau.

Selon l'invention et selon les détails représentés aux figures 5b et 5c pour deux des fixations du panneau, la contre-ferrure interne 12 comporte un profil général en U dont une première branche latérale 12a s'appuie contre la face interne de la première peau, la branche centrale 12b s'appuie contre un flanc du raidisseur et la seconde branche latérale 12c s'appuie contre la paroi interne de la face supérieure du caisson formant la paroi interne du panneau.

Cette contre-ferrure interne est fixée à l'intérieur de la face supérieure du panneau constituée par la seconde peau avant que cette dernière ne soit assemblée avec la première peau.

La ferrure externe 13 s'applique sur un rebord interne 1a du panneau constitué par la face interne de la première peau et la face externe d'un des flancs de liaison 6.

La contre-ferrure et la ferrure externe sont liées ensemble au travers du flanc de liaison de la seconde peau par rivetage ou boulonnage 14 par exemple.

Ainsi, les ferrures supportant les moyens de fixation du panneau sont directement solidaires des deux peaux du panneau auto-raidi et la réalisation en ferrure et contre-ferrure se reprenant sur la première et la seconde peau répartit les efforts sur ces deux peaux et sur l'ensemble du panneau auto-raidi.

Selon un mode de réalisation avantageux, une ferrure formant insert de renfort 15 représenté en figure 6 est disposé dans la poutre du cadre en regard d'une zone de réception des éléments de ferrure de liaison 9, 10, 11 avec le fuselage afin de rigidifier le panneau dans la zone de fixation des ferrures externes.

Pour donner un profil aérodynamique au panneau, au moins un flanc de liaison 6a, 6b, 6c, 6d, 6e, et notamment au moins l'un des flancs orientés selon une direction sensiblement perpendiculaire à l'axe des ferrures de liaison 9, 10, 11 constitue une surface inclinée de transition progressive entre la peau externe et la face supérieure en sorte de constituer un profil aérodynamique

De même la section du panneau peut se réduire vers le côté opposé aux éléments de liaison comme représenté selon l'exemple de la figure 7.

Le panneau selon l'invention est d'une grande rigidité pour une masse faible et, du fait de son aérodynamisme génère peu de bruit et peu de traînée. Il peut en outre être aisément drainé par la réalisation de trous 16, 17 préférablement réalisés sur les panneaux.

L'invention ne se limite pas à l'exemple représenté et notamment un panneau comportant une seule découpe ou plus de deux découpes reste dans le cadre de l'invention.

## Revendications

1. Panneau composite comportant une première peau formant la paroi externe du panneau dite face inférieure (1), une seconde peau formant partie de la paroi interne du panneau, **caractérisé en ce que** la seconde peau est formée en creux pour constituer un cadre de renfort interne (2) formant au moins un raidisseur (3) à profil creux, pourvu de bords tombés (4a, 4b) de fixation à la première peau, d'une face dite face supérieure (5), de flancs de liaison (6, 6a, 6b, 6c, 6d, 6e, 7) entre lesdits bords (4a, 4b) et ladite face supérieure (5), le cadre formé par la seconde peau comportant des découpes (8) délimitées par les éléments de raidisseur constituant le cadre (2) et réalisant avec la première peau un panneau auto-raidl monolithique.

2. Panneau composite selon la revendication 1 **caractérisé en ce que** le cadre de renfort interne réalise une pluralité de raidisseurs à profil creux répartis sur le pourtour du panneau.

3. Panneau composite selon la revendication 1 ou 2 **caractérisé en ce que** les découpes (8) sont délimitées par des portions de poutres en caisson.

4. Panneau composite selon la revendication 1, 2 ou 3 **caractérisé en ce que** le cadre (2) est réalisé par emboutissage de la seconde peau.

5. Panneau composite selon l'une quelconque des revendications précédentes **caractérisé en ce que** les peaux sont réalisées en matériaux composites à matrice thermoplastique.

6. Panneau composite selon l'une quelconque des revendications précédentes **caractérisé en ce qu'**il comporte des éléments de liaison (9, 10, 11) comportant des ferrures de liaison réalisées en une contre-ferrure interne (12) et une ferrure externe (13).

7. Panneau composite selon la revendication 6 **caractérisé en ce que** la contre-ferrure interne (12) comporte un profil général en U dont une première branche latérale (12a) s'appuie contre la face interne de la première peau, la branche centrale (12b) s'appuie contre un flanc du raidisseur et la seconde branche latérale (12c) s'appuie contre la paroi interne de la face supérieure du raidisseur formant la paroi interne du panneau.

8. Panneau composite selon la revendication 6 ou 7 **caractérisé en ce que** la ferrure externe (13) s'applique sur un rebord interne (1a) du panneau constitué par la face interne de la première peau et la face externe d'un des flancs de liaison (6).

9. Panneau composite selon la revendication 7 et 8 **caractérisé en ce que** la contre-ferrure et la ferrure externe sont fixées ensemble (14) au travers du flanc de liaison.

10. Panneau composite selon l'une quelconque des revendications 6 à 9 **caractérisé en ce qu'**une pluralité de ferrures sont liées entre elles pour constituer un insert de renfort (15) disposé dans la poutre du cadre en regard d'une zone de réception des éléments de ferrure de liaison (9, 10, 11).

11. Panneau composite selon l'une quelconque des revendications précédentes **caractérisé en ce qu'**au moins un flanc de liaison (6a, 6b, 6c, 6d, 6e) orienté selon une direction sensiblement perpendiculaire à l'axe des ferrures de liaison (9, 10, 11) constitue une surface inclinée de transition progressive entre la peau externe et la face supérieure en sorte de constituer un profil aérodynamique.

## Claims

1. A composite panel comprising a first skin forming the external wall of the panel referred to as the bottom face (1), a second skin forming part of the internal wall of the panel, **characterised in that** the second skin is formed recessed in order to constitute an internal reinforcing frame (2) forming at least one stiffener (3) with a hollow profile, provided with turned-over edges (4a, 4b) for fixing to the first skin, a face referred to as the top face (5), with connecting flanks (6, 6a, 6b, 6c, 6d, 6e, 7) between said edges (4a, 4b) and said top face (5), the frame formed by the second skin comprising cutouts (8) delimited by the stiffening elements forming the frame (2) and producing with the first skin a single-piece self-stiffened panel.

2. A composite panel according to claim 1, **characterised in that** the internal reinforcing frame produces a plurality of stiffeners with a hollow profile distributed over the periphery of the panel.

3. A composite panel according to claim 1 or 2, **characterised in that** the cutouts (8) are delimited by portions of beams in box form.

4. A composite panel according to claim 1, 2 or 3, **characterised in that** the frame (2) is produced by pressing the second skin.

5. A composite panel according to any one of the preceding claims, **characterised in that** the skins are produced from composite materials with a thermoplastic matrix.

6. A composite panel according to any one of the preceding claims, **characterised in that** it comprises connecting elements (9, 10, 11) comprising connecting bars produced as an internal counter-fitting (12) and an external fitting (13).

7. A composite panel according to claim 6, **characterised in that** the internal counter-fitting (12) comprises a general U-shaped profile, a first lateral arm (12a) of which bears against the internal face of the first skin, the central arm (12b) of which bears against a flank of the stiffener and the second lateral arm (12c) of which bears against the internal wall of the top face of the stiffener forming the internal wall of the panel.

8. A composite panel according to claim 6 or 7, **characterised in that** the external fitting is applied against an internal rim (1a) of the panel formed by the internal face of the first skin and the external face of one of the connecting flanks (6).

9. A composite panel according to claim 7 and 8, **characterised in that** the counter-fitting and the external fitting are fixed together (14) through the connecting flank.

10. A composite panel according to any one of claims 6 to 9, **characterised in that** a plurality of fittings are connected together in order to constitute a reinforcing insert (15) disposed in the beam of the frame opposite an area for receiving the connecting fitting elements (9, 10, 11).

11. A composite panel according to any one of the preceding claims, **characterised in that** at least one connecting flank (6a, 6b, 6c, 6d, 6e) oriented in a direction substantially perpendicular to the axis of the connecting fittings (9, 10, 11) constitutes an inclined surface for progressive transition between the external skin and the top face so as to constitute an aerodynamic profile.

## Patentansprüche

1. Verbundplatte, die eine erste Beplankung, die die Außenwand der Platte, die so genannte Unterseite (1), bildet, und eine zweite Beplankung, die einen Teil der Innenwand der Platte bildet, umfasst, **dadurch gekennzeichnet, dass** die zweite Beplankung hohl ausgebildet ist, um einen inneren Verstärkungsrahmen (2) zu bilden, der wenigstens eine Versteifung (3) mit Hohlprofil bildet, die mit umgeschlagenen Rändern (4a, 4b) für die Befestigung an der ersten Beplankung, mit einer so genannten Oberseite (5) sowie mit Verbindungsflanken (6, 6a, 6b, 6c, 6d, 6e, 7) zwischen den Rändern (4a, 4b) und der Oberseite (5) versehen ist, wobei der Rahmen, der durch die zweite Beplankung gebildet ist, Ausschnitte (8) aufweist, die durch die Versteifungselemente begrenzt sind, die den Rahmen (2) bilden und mit der ersten Beplankung eine monolithische selbstversteifende Platte bilden.

2. Verbundplatte nach Anspruch 1, **dadurch gekennzeichnet, dass** der innere Verstärkungsrahmen mehrere Versteifungen mit Hohlprofil bildet, die auf dem Umfang der Platte verteilt sind.

3. Verbundplatte nach Anspruch 1 oder 2, **dadurch gekennzeichnet, dass** die Ausschnitte (8) durch Abschnitte von Rahmenträgern begrenzt sind.

4. Verbundplatte nach Anspruch 1, 2 oder 3, **dadurch gekennzeichnet, dass** der Rahmen (2) durch Tiefziehen der zweiten Beplankung verwirklicht ist.

5. Verbundplatte nach einem der vorhergehenden Ansprüche, **dadurch gekennzeichnet, dass** die Beplankungen aus Verbundstoffen mit thermoplastischem Grundstoff verwirklicht sind.

6. Verbundplatte nach einem der vorhergehenden Ansprüche, **dadurch gekennzeichnet, dass** sie Verbindungselemente (9, 10, 11) enthält, die Verbindungsbeschläge aufweisen, die aus einem inneren Gegenbeschlag (12) und einem äußeren Beschlag (13) verwirklicht sind.

7. Verbundplatte nach Anspruch 6, **dadurch gekennzeichnet, dass** der innere Gegenbeschlag (12) ein allgemeines U-Profil umfasst, wovon sich ein erster seitlicher Schenkel (12a) an der Innenseite der ersten Beplankung abstützt, der mittige Schenkel (12b) sich an einer Flanke der Versteifung abstützt und der zweite seitliche Schenkel (12c) sich an der Innenwand der oberen Seite der Versteifung, die die Innenwand der Platte bildet, abstützt.

8. Verbundplatte nach Anspruch 6 oder 7, **dadurch gekennzeichnet, dass** der äußere Beschlag (13) an einem inneren Rand (1a) der Platte anliegt, der durch die Innenseite der ersten Beplankung und die Außenseite einer der Verbindungsflanken (6) gebildet ist.

9. Verbundplatte nach Anspruch 7 und 8, **dadurch gekennzeichnet, dass** der Gegenbeschlag und der äußere Beschlag gemeinsam (14) über der Verbindungsflanke befestigt sind.

10. Verbundplatte nach einem der Ansprüche 6 bis 9, **dadurch gekennzeichnet, dass** mehrere Beschläge miteinander verbunden sind, um einen Verstärkungseinsatz (15) zu bilden, der in dem Träger des Rahmens gegenüber einer Zone für die Aufnahme der Verbindungsbeschlagelemente (9, 10, 11) angeordnet ist.

11. Verbundplatte nach einem der vorhergehenden Ansprüche, **dadurch gekennzeichnet, dass** wenigstens eine Verbindungsflanke (6a, 6b, 6c, 6d, 6e), die in einer zur Achse der Verbindungsbeschläge (9, 10, 11) im Wesentlichen senkrechten Richtung orientiert ist, eine geneigte progressive Übergangsfläche zwischen der äußeren Beplankung und der Oberseite bildet, um ein aerodynamisches Profil zu bilden.
